(19) Europäisches Patentamt
European Patent Office
Office européen des brevets

(11) **EP 3 418 607 A1**

(12) **EUROPEAN PATENT APPLICATION**
published in accordance with Art. 153(4) EPC

(43) Date of publication:
**26.12.2018 Bulletin 2018/52**

(51) Int Cl.:
*F16H 48/36* (2012.01)   *F16H 48/10* (2012.01)
*F16H 48/38* (2012.01)   *F16H 57/04* (2010.01)

(21) Application number: **17752871.8**

(22) Date of filing: **18.01.2017**

(86) International application number:
**PCT/JP2017/001471**

(87) International publication number:
**WO 2017/141607 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:   **17.02.2016   JP 2016027506**

(71) Applicant: **NTN Corporation**
**Osaka-shi, Osaka 550-0003 (JP)**

(72) Inventors:
• **SUZUKI, Kenichi**
**Iwata-shi**
**Shizuoka 438-8510 (JP)**
• **YUKISHIMA, Ryou**
**Iwata-shi**
**Shizuoka 438-8510 (JP)**

(74) Representative: **Grünecker Patent- und Rechtsanwälte PartG mbB Leopoldstraße 4 80802 München (DE)**

(54) **VEHICLE-DRIVING APPARATUS**

(57)     An object of the present invention is to decrease the size of a torque difference amplification mechanism to decrease the size and weight of a vehicle driving wheel apparatus which includes the torque difference amplification mechanism. The invention includes a gear unit 30, which is provided between electric motors (2L, 2R) each having an outer rotor (5) and left and right driving wheels and is constituted by two planetary gear mechanisms (3L, 3R) each having three elements and two degrees of freedom assembled coaxially with each other. The planetary gear mechanisms include: input outer gears ($R_L$, $R_R$) coupled to the outer rotors (5) of the electric motors (2L, 2R); output planetary carriers ($C_L$, $C_R$) coaxial with the outer gears ($R_L$, $R_R$); sun gears $S_L$, $S_R$ which are coaxial with the outer gears ($R_L$, $R_R$); and planetary gears $P_L$, $P_R$ serving as revolution gears. One planetary carrier ($C_L$) of the two planetary gear mechanisms (3L, 3R) is joined to the sun gear ($S_R$) in the other by a first joint member (31); the sun gear ($S_L$) is joined to the planetary carrier ($C_R$) in the other by a second joint member (32) and these joint members are disposed coaxially with each other. The planetary carriers ($C_L$, $C_R$) of the planetary gear mechanism ($S_L$, $S_R$) are coupled to output gear shafts (14L, 14R) of the driving wheels.

FIG. 5

EP 3 418 607 A1

**Description**

TECHNICAL FIELD

The present invention relates to a vehicle driving apparatus capable of amplifying a drive torque difference between two independent driving sources before transmitting torques to a left and a right driving wheels.

BACKGROUND ART

In a vehicle such as an electric car, there is a conventional arrangement that each of a left and a right driving wheels is provided with an electric motor, and each electric motor is controlled independently from each other so that there is an appropriate drive torque difference between the left driving wheel and the right driving wheel to control a turning moment of the vehicle. For example, in a case where each electric motor is connected to the corresponding right or left driving wheel independently from each other via a speed reducer, rotation speed of each electric motor is reduced in each speed reducer while output torque of each electric motor is amplified in each speed reducer before transmission to the corresponding left or right driving wheel. In this arrangement, the electric motors have the same output characteristics, and the speed reducers have the same reduction ratio, so that the vehicle will have the same behavior in both left and right turning.

When there is a need to give an output torque difference between the left driving wheel and the right driving wheel, the left electric motor and the right electric motor are operated to give different output torques, and these output torques from the left electric motor and the right electric motor are transmitted to the left driving wheel and the right driving wheel via the speed reducers.

The output torques which are transmitted from the left electric motor and the right electric motor to the left driving wheel and the right driving wheel are torques after being amplified by the speed reducers according to a certain reduction ratio. Since the left speed reducer and the right speed reducer have the same reduction ratio, an output torque difference ratio in the left driving wheel and the right driving wheel is the same as an output torque difference ratio in the left electric motor and the right electric motor. Thus, the output torque difference ratio in the left driving wheel and the right driving wheel is not amplified.

However, there are cases where it is effective to increase the difference ratio of output torques transmitted to the left driving wheel and the right driving wheel to be greater than the difference ratio of output torques supplied from the left electric motor and the right electric motor, in order to achieve smooth tuning of the vehicle, or reduce excessive behavioral changes of the vehicle caused by extreme understeer or oversteer for example.

Patent Literature 1 and Patent Literature 2 disclose vehicle driving apparatuses each including a gear unit between two driving sources and driving wheels on the left and the right. The gear unit has two coaxially assembled planetary gear mechanisms each having three elements with two degrees of freedom, and is capable of amplifying a difference of torques from the two driving sources before supplying torques to the left driving wheel and the right driving wheel.

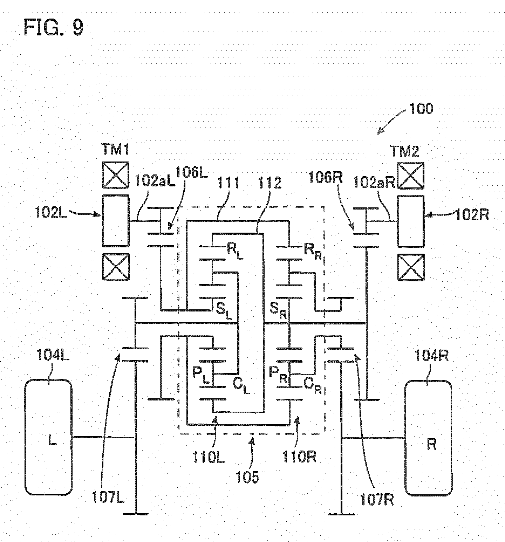

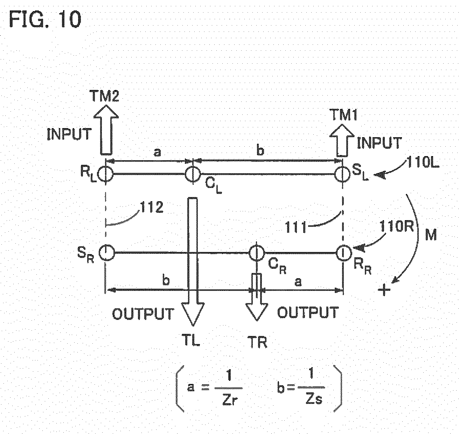

The vehicle driving apparatus disclosed in Patent Literature 1 (hereinafter, called "conventional technique 1") will be described with reference to Fig. 9 and Fig. 10. Fig. 9 is a skeleton diagram which shows a gear configuration of the vehicle driving apparatus according to the conventional technique 1. Fig. 10 is a velocity diagram for explaining a torque difference amplification factor in the gear unit which is incorporated in the vehicle driving apparatus according to the conventional technique 1.

The vehicle driving apparatus 100 includes: a left electric motor 102L and a right electric motor 102R mounted on a vehicle; a left driving wheel 104L and a right driving wheel 104R; and a gear unit 105 and speed reducer gear trains 106L, 106R, and 107L, 107R between them.

The electric motor 102L and the electric motor 102R are powered by a battery (not illustrated) provided in the vehicle, controlled by an electronic control system (not illustrated) independently, and capable of generating and outputting different torques from each other.

The electric motor 102L has an output shaft 102aL, the electric motor 102R has an output shaft 102aR, and these shafts are connected to joint members 111, 112 of the gear unit 105 via the speed reducer gear trains 106L, 106R, respectively. Output from the gear unit 105 is supplied to the left and the right driving wheel 104L, 104R via the speed reducer gear train 107L, 107R.

The gear unit 105 is an assembly of two identical planetary gear mechanisms 110L, 110R, each having three elements and two degrees of freedom, and coaxially arranged with the other.

Each of the planetary gear mechanisms 110L, 110R is provided by, for example, a single pinion planetary gear mechanism. The single pinion planetary gear mechanisms include: coaxially arranged sun gears $S_L$, $S_R$ and outer gears $R_L$, $R_R$; a plurality of planetary gears $P_L$, $P_R$ between the sun gears $S_L$, $S_R$ and the outer gears $R_L$, $R_R$; and planetary carriers $C_L$, $C_R$ which support the planetary gears $P_L$, $P_R$ rotatably and are coaxial with the sun gears $S_L$, $S_R$ and the outer gears $R_L$, $R_R$. It should be noted here that the sun gears $S_L$, $S_R$ and the planetary gears $P_L$, $P_R$ are external gears having their teeth on their outer circumferences, while the outer gears $R_L$, $R_R$ are internal gears having their teeth on their inner circumferences.

The planetary gears $P_L$, $P_R$ engage with the sun gears $S_L$, $S_R$ and the outer gears $R_L$, $R_R$. In the planetary gear mechanisms, if the planetary carriers $C_L$, $C_R$ are fixed, the sun gears $S_L$, $S_R$ and the outer gears $R_L$, $R_R$ rotate in reverse directions. For this reason, in the velocity diagram, the outer gears $R_L$, $R_R$ and the sun gears $S_L$, $S_R$ are disposed on opposite sides with respect to the planetary carriers $C_L$, $C_R$. In other words, the outer gears $R_L$, $R_R$ are on the opposite side of the sun gears $S_L$, $S_R$, with the planetary carriers $C_L$, $C_R$ in between.

In the velocity diagram of Fig. 10, a ratio of a distance between the planetary carriers $C_L$, $C_R$ and the outer gears $R_L$, $R_R$ to a distance between the planetary carriers $C_L$, $C_R$ and the sun gears $S_L$, $S_R$ is equal to a ratio of an inverse (1/Zr) of the number of teeth Zr of the outer gears $R_L$, $R_R$ to an inverse (1/Zs) of the number of teeth Zs of the sun gears $S_L$, $S_R$.

As shown in Fig. 9, in the gear unit 105, a first planetary gear mechanism, i.e., the planetary gear mechanism 110L which has the sun gear $S_L$, the planetary carrier $C_L$, the planetary gears $P_L$, and the outer gear $R_L$; and a second planetary gear mechanism, i.e., the planetary gear mechanism 110R which has the sun gear $S_R$, the planetary carrier $C_R$, the planetary gears $P_R$, and the outer gear $R_R$; are assembled coaxially with each other.

With these arrangement, the sun gear $S_L$ of the first planetary gear mechanism 110L and the outer gear $R_R$ of the second planetary gear mechanism 110R are joined to each other with a first joint member 111, whereas the outer gear $R_L$ of the first planetary gear mechanism 110L and the sun gear $S_R$ of the second planetary gear mechanism 110R are joined to each other with a second joint member 112.

The first joint member 111 is supplied with a torque TM1, which is generated by the electric motor 102L, via the speed reducer gear train 106L, whereas the second joint member 112 is supplied with a torque TM2, which is generated by the electric motor 102R, via the speed reducer gear train 106R. The planetary carrier $C_L$ of the first planetary gear mechanism 110L and the planetary carrier $C_R$ of the second planetary gear mechanism 110R are connected to the left and the right driving wheel 104L, 104R via the speed reducer gear trains 107L, 107R respectively to take out outputs.

Now, reference will be made to the velocity diagrams shown in Fig. 10, to explain driving torques which are transmitted by the gear unit 105.

Since the gear unit 105 is an assembly of the two identical planetary gear mechanisms 110L, 110R, it is graphically represented as two velocity diagrams as shown in Fig. 10. For easy understanding, the two velocity diagrams are arranged in the up-down direction, with the upper velocity diagram representing the planetary gear mechanism 110L, while the lower velocity diagram representing the planetary gear mechanism 110R.

Note that the velocity diagram of the first planetary gear mechanism 110L and the velocity diagram of the second planetary gear mechanism 110R are disposed in such a manner that the sun gears $S_L$, $S_R$ and the outer gears $R_L$, $R_R$ are at reversed locations in terms of left and right relationship. In other words, in Fig. 10, the outer gear $R_R$ of the second planetary gear mechanism 110R is disposed under the sun gear $S_L$ of the first planetary gear mechanism 110L, whereas the sun gear $S_R$ of the second planetary gear mechanism 110R is disposed under the outer gear $R_L$ of the first planetary gear mechanism 110L.

Note also that in this gear unit 105, the components at the same end of the two velocity diagrams shown in Fig. 10 are joined to the first joint member 111 or the second joint member 112, as indicated by broken lines in the figure. With this, the torques TM1 and TM2 which are outputted from the first motor 102L and the second motor 102R are inputted to the first joint member 111 and the second joint member 112, respectively. Note further that the torques TM1 and TM2 outputted from the electric motors 102L, 102R are amplified by a certain reduction ratio in the speed reducer gear trains 106L, 106R when inputted to the joint members 111, 112, but for the sake of easy understanding, description will omit the amplification process, and the torques which are inputted to the joint member 111, 112 will continue to be called TM1 and TM2 hereinafter throughout the velocity diagrams and equations.

As for the outputs, driving torques TL, TR are outputted and transmitted to the left and the right driving wheels 104L, 104R from the planetary carriers $C_L$, $C_R$ which are positioned in the middle on the velocity diagrams in Fig. 10.

With these arrangements as described thus far, when the gear unit 105 is given a torque difference (input torque difference) $\Delta$TIN (= TM2 - TM1), between the driving torques TM1, TM2 which are generated in the first electric motor 102L and the second electric motor 102R, it is possible to generate a driving torque difference $\Delta$TOUT (= TL - TR) between a driving torque TL and a driving torque TR which are transmitted to the left driving wheel 104L and the right driving wheel 104R. In other words, according to the gear unit 105, a relationship expressed by the following equation (1) is obtained, where a coefficient $\alpha$ is a torque difference amplification factor:

$$(TL - TR) = \alpha * (TM2 - TM1) \quad ...(1)$$

Hereinbelow, the torque difference amplification factor $\alpha$ of the gear unit 105 in the conventional technique I will be discussed. The two planetary gear mechanisms 110L, 110R are single pinion planetary gear mechanisms and the number of teeth in their gear elements is identical. In the velocity diagrams, this means that a distance between the outer gear $R_L$ and the planetary carrier $C_L$ is equal to a distance between the outer gear $R_R$ and the planetary carrier $C_R$, and this distance will be represented by "a". Likewise, a distance between the sun gear $S_L$ and the carrier $C_L$ is equal to a distance between the sun gear $S_R$ and the planetary carrier $C_R$, and this distance will be represented by "b".

Now, in the arrangement that the first joint member 111 and the second joint member 112 at the right and the left ends are supplied with the torques TM1, TM2 of the first electric motor 102L and of the second electric motor 102R, and the driving torques TL, TR are taken from the planetary carriers $C_L$, $C_R$, the relationship between the input and output torques is represented by the following equation (2):

$$TR + TL = TM1 + TM2 \quad ...(2)$$

Also, when the left ends ($R_L$, $S_R$) in the diagrams is taken as reference points, a moment equation is given as the following equation (3), where an arrow M in Fig. 10 indicates the positive direction of the moment:

$$0 = aTL + bTR - (a + b)\,TM1 \quad ...(3)$$

From the equations (2), (3), the following equations (4), (5) are obtained for TL and TR:

$$TL = ((a/(b - a)) + 1)\cdot TM2 - (a/(b - a))\cdot TM1 \quad ...(4)$$

$$TR = ((a/(b - a)) + 1)\cdot TM1 - (a/(b - a))\cdot TM2 \quad ...(5)$$

From the equations (4) and (5), the driving torque difference (TL - TR) is given by the following equation (6):

$$(TL - TR) = ((a + b)/(b - a))\cdot(TM2 - TM1) \,...(6)$$

In the single pinion planetary gear mechanism, the length "a" is an inverse (1/Zr) of the number of teeth Zr of the outer gears $R_L$, $R_R$, while the length "b" is an inverse (1/Zs) of the number of teeth Zs of the sun gears $S_L$, $S_R$: Therefore, the equation above is transformed to the following equation (7):

$$(TL - TR) = ((Zr + Zs)/(Zr - Zs))\cdot(TM2 - TM1) \quad ...(7)$$

From the equation (7) above, the torque difference amplification factor $\alpha$ is given as (Zr + Zs)/(Zr - Zs).

As described above, in the conventional technique 1, the input from the first electric motor 102L is $S_L + R_R$, while that of the second electric motor 102R is $S_R + R_L$. Also, an output to the driving wheel 104L is $C_L$, while an output to the driving wheel 104R is $C_R$.

When the two electric motors 102L, 102R generate mutually different torques TM1, TM2 and there is an input torque difference $\Delta$TIN (= (TM2 - TM1)), the gear unit 105 amplifies the input torque difference $\Delta$TIN and therefore it is possible to obtain a driving torque difference $\alpha\cdot\Delta$TIN which is larger than the input torque difference $\Delta$TIN. In other words, even if the input torque difference $\Delta$TIN is small, it is possible with the gear unit 105 to amplify the input torque difference $\Delta$TIN by a predetermined torque difference amplification factor a, and therefore it is possible to make the driving torque difference $\Delta$TOUT (= $\alpha \cdot$ (TM2 - TM1)) which is larger than the input torque difference $\Delta$TIN between the driving torques TL, TR supplied to the left driving wheel 104L and the right driving wheel 104R.

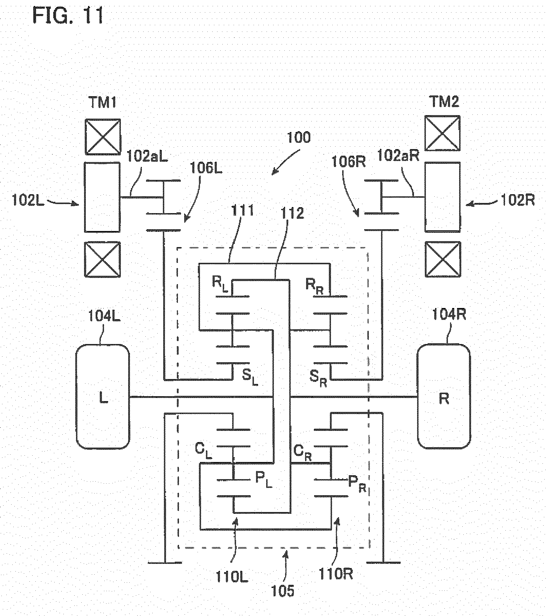

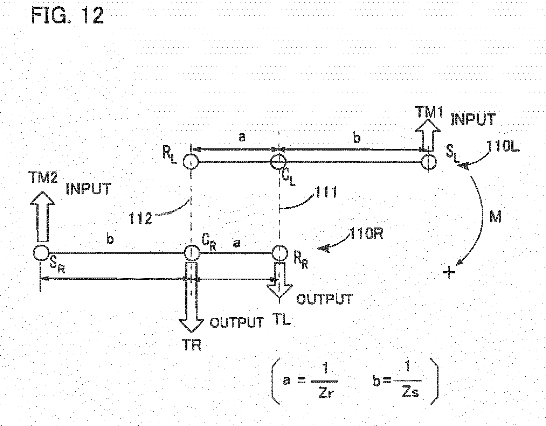

Next, the vehicle driving apparatus disclosed in Patent Literature 2 (hereinafter, called "conventional technique 2") will be described with reference to Fig. 11 and Fig. 12. Fig. 11 is a skeleton diagram which shows a gear configuration of the vehicle driving apparatus according to the conventional technique 2. Fig. 12 is a velocity diagram for explaining a torque difference amplification factor in the vehicle driving apparatus according to the conventional technique 2.

For easy understanding of differences from the conventional technique 1, Fig. 11 uses the same format as for the conventional technique 1, with the electric motors 102L, 102R being positioned on the left and the right respectively, with equivalent components being indicated by the same reference symbols.

As shown in Fig. 11, the vehicle driving apparatus 100 includes: a first electric motor 102L and a second electric motor 102R equipped in the vehicle; a left driving wheel 104L and a right driving wheel 104R; and a gear unit 105 and speed reducer gear trains 106L, 106R between them.

The first electric motor 102L and the second electric motor 102R are powered by a battery (not illustrated) provided in the vehicle, controlled by an electronic control system (not illustrated) independently, and capable of generating and outputting different torques from each other. The first electric motor 102L has an output shaft 102aL, the second electric motor 102R has an output shaft 102aR, and these shafts are connected to sun gears $S_L$, $S_R$ in the gear unit 105 via the speed reducer gear trains 106L, 106R respectively. Outputs from the gear unit 105 are supplied to the left and the right driving wheel 104L, 104R.

Like in the conventional technique 1, the gear unit 105 in the conventional technique 2 is an assembly of two identical planetary gear mechanisms 110L, 110R, each having three elements, two degrees of freedom, and coaxially arranged with the other. Each of the planetary gear mechanisms 110L, 110R is provided by, for example, a single pinion planetary gear mechanism.

With these arrangement, the planetary carrier $C_L$ of the first planetary gear mechanism 110L and the outer gear $R_R$ of the second planetary gear mechanism 110R are joined to each other with a first joint member 111, while the outer gear $R_L$ of the first planetary gear mechanism 110L and the planetary carrier $C_R$ of a second planetary gear mechanism 110R are joined to each other with a second joint member 112.

A torque TM1 generated in the first electric motor 102L is inputted to the sun gear $S_L$ of the first planetary gear mechanism 110L via the speed reducer gear train 106L, while a torque TM2 generated in the second electric motor 102R is inputted to the sun gear $S_R$ of the second planetary gear mechanism 110R via the speed reducer gear train 106R.

To take out outputs, the first joint member 111 and the second joint member 112 are connected to the left driving wheel 104L and the right driving wheel 104R respectively.

As described above, in the conventional technique 2, inputs from the electric motors 102L, 102R are $S_L$, $S_R$, while outputs to the driving wheels 104L, 104R are $C_L + R_R$, $C_R + R_L$ respectively.

Now, driving torques which are transmitted by the gear unit 105 according to the conventional technique 2 will be described with reference to the velocity diagrams shown in Fig. 12.

Since the gear unit 105 is an assembly of the two identical single pinion planetary gear mechanisms 110L, 110R, it is graphically represented as two velocity diagrams as shown in Fig. 10. For easy understanding, the two velocity diagrams are arranged in the up-down direction, with the upper velocity diagram representing the first planetary gear mechanism 110L, while the lower velocity diagram representing the second planetary gear mechanism 110R. Also, like the explanation of the conventional technique 1, reduction ratios in each of the speed reducer gear trains 106L, 106R will be omitted in the following explanation for the velocity diagrams and equations, i.e., the torques inputted to the sun gears $S_L$, $S_R$ will continue to be called TM1 and TM2 respectively.

In the gear unit 105 shown in Fig. 11, the planetary carrier $C_L$ and the outer gear $R_R$ shown in Fig. 12 are joined to each other with the first joint member 111 as indicated by a broken line in the figure, whereas the planetary carrier $C_R$ and the outer gear $R_L$ are joined to each other with the second joint member 112 as indicated by another broken line in the figure.

The torques TM1 and TM2 outputted from the first electric motor 102L and the second electric motor 102R are inputted to the sun gears $S_L$, $S_R$. As for the outputs, driving torques TL, TR are outputted from the first joint member 111 and the second joint member 112 which are in the middle on the velocity diagrams, and transmitted to the left driving wheel 104L and the right driving wheel 104R.

It is possible, also with the gear unit 105 having the arrangement as described above, to generate a driving torque difference ΔTOUT(™ TR - TL) between a driving torque TL and a driving torque TR which are transmitted to the left driving wheel 104L and the right driving wheel 104R, when there is a torque difference (input torque difference) ΔTIN(= TM2 - TM1) between the driving torques TM1, TM2 which are generated in the first electric motor 102L and the second electric motor 102R.

Hereinbelow, the torque difference amplification factor $\alpha$ of the gear unit 105 in the conventional technique 2 will be discussed. Again in the conventional technique 2, two, single pinion planetary gear mechanisms 110L, 110R use gear elements having identical number of teeth: So, a distance between the outer gear $R_L$ and the planetary carrier $C_L$ is equal to a distance between the outer gear $R_R$ and the planetary carrier $C_R$ in the velocity diagrams, and this distance will be represented by "a". Likewise, a distance between the sun gear $S_L$ and the planetary carrier $C_L$ is equal to a distance between the sun gear $S_R$ and the planetary carrier $C_R$, and this distance will be represented by "b".

Fig. 12 shows the velocity diagrams representing the gear unit 105 of the conventional technique 2.

It is possible to obtain a torque difference amplification factor $\alpha$ from proportions of the torques in the velocity diagrams, where an arrow M in Fig. 12 indicates the positive direction of the moment.

With $S_R$ being a point of reference, a proportion of moment M yields the following equation (8):

$$b \cdot TR + (a + b) \cdot TL - (a + 2b) \cdot TM1 = 0 \qquad \ldots(8)$$

With $S_L$ being a point of reference, a proportion of moment M yields the following equation (9):

$$-b \cdot TL - (a + b) \cdot TR + (a + 2b) \cdot TM2 = 0 \qquad \ldots(9)$$

From Equation (8) + Equation (9), the following equation (10) is derived:

$$a \cdot (TR - TL) - (a + 2b) \cdot (TM2 - TM1) = 0$$

$$(TR - TL) = ((a + 2b)/a) \cdot (TM2 - TM1) \qquad \ldots(10)$$

The term (a + 2b)/a in Equation (10) is the torque difference amplification factor a.

Through substitution with a-1/Zr and b=1/Zs, $\alpha$ = (2Zr + Zs)/Zs is obtained.

In the conventional technique 2, inputs from the electric motors 102L, 102R are $S_L$, $S_R$; outputs to the driving wheels 104L, 104R are $C_L + R_R$, $C_R + R_L$; and the torque difference amplification factor $\alpha$ is (2Zr + Zs)/Zs.

As described above, it is possible in the conventional technique 1 and the conventional technique 2 by generating different torques TM1, TM2 with two electric motors 102L, I02R, to give an input torque difference $\Delta$TIN to a gear unit 105, thereby amplifying the input torque difference $\Delta$TIN to a driving torque difference $\Delta$TOUT which is larger than the input torque difference $\Delta$TIN.

CITATION LIST

PATENT LITERATURE

Patent Literature 1: JP-A-2015-21594
Patent Literature 2: JP-B-4907390

SUMMARY OF INVENTION

TECHNICAL PROBLEM

A vehicle driving apparatus must be compact and light weighted since it must be mounted on a vehicle and must provide sufficient mounting space.

If the vehicle driving apparatus had its gear unit directly coupled to the motor at its input shaft, with the gear unit's output shaft coupled to the wheels, huge motors would have to be employed since the motors must provide driving torques required by the driving wheels. For this reason, the vehicle driving apparatus includes several gear shafts as a speed reducing mechanism for amplifying the torques from the motors and then transmit the torques to the driving wheels.

The gear shafts are provided as a two-stage speed reducing mechanism including: an input gear shaft which is coupled to the output shaft of the motor and has a small-diameter gear serving as an input gear; an output gear shaft which is coupled to the driving wheel and has a large-diameter gear serving as an output gear; and an intermediate gear shaft which has a large-diameter gear engaged with the input gear and a small-diameter gear coaxial therewith, and in engagement with the output gear.

Neither the conventional technique I nor the conventional technique 2 refers to a specific place to dispose the gear unit in the vehicle driving apparatus, but the conventional technique 1 discloses an embodiment in which the gear unit is disposed on an output side of the two-stage reducer, and the conventional technique 2 discloses an embodiment in which the gear unit is disposed on an input side of the two-stage reducer.

Disposing the gear unit on the output side of the two-stage reducer requires that component gears, bearings and others must have sufficient strength and therefore large enough to endure output torques, and as a result, the vehicle driving apparatus can be large and costly to manufacture.

If, on the other hand, the gear unit is disposed on the input side of the two-stage reducer, each gear of the planetary gear mechanisms in the gear unit are driven at a high speed, with increases likelihood of friction heat generation due to slippage between gear teeth flanks.

If this is to be overcome by cooling the gear tooth flank with lubricant oil, a complicated structure must be employed in order to ensure cooling of the two mutually coupled planetary gear mechanisms, which can pose a technical difficulty to provide lubrication oil path inside the gear unit.

Further, in the conventional technique I and the conventional technique 2, the outer gears $R_L$, $R_R$ in the two planetary gear mechanisms are connected to respective joint members to amplify the torque difference; resulting in an unavoidable problem that one of the joint members which connects one of the left outer gear $R_L$ and the right outer gear $R_R$ with another member must have a larger-diameter than the other of the outer gears $R_L$, $R_R$, increasing the size of the apparatus.

Therefore, an object of the present invention is to decrease the size of the gear unit which serves as a torque amplification component incorporated in the vehicle driving apparatus, and make it possible to keep the number of revolutions on the input stage at a low level, thereby solving the lubrication problem in the conventional vehicle driving apparatus.

SOLUTION TO PROBLEM

In order to achieve the object, the present invention provides a vehicle driving apparatus which includes: two driving sources each mounted on a vehicle and controllable independently from the other; a left driving wheel and a right driving wheel; and a gear unit mounted between the two driving sources and the left and right driving wheels, the gear unit including two coaxially assembled planetary gear mechanisms each having three elements with two degrees of freedom; wherein each of the driving sources is provided by an electric motor including an outer rotor, each of the planetary gear mechanisms includes an input outer gear coupled to the outer rotor of the electric motor, an output planetary carrier provided coaxially with the outer gear, a sun gear provided coaxially with the outer gear, and planetary gears as revolutionary gears, the planetary carrier of one of the two planetary gear mechanisms is joined to the sun gear of the other by a first joint member, the sun gear of said one of the two is joined to the planetary carrier of said other by a second joint member, the two joint members are coaxial with each other, and the planetary carrier of each of the planetary gear mechanisms is coupled to an output gear shaft of the driving wheel.

The outer gear which makes engagement with the planetary gears of the planetary gear mechanism, may be provided in an inner diameter surface of the outer rotor of the electric motor, integrally therewith.

The outer gear, which makes engagement with the planetary gears of the planetary gear mechanism may be provided separately at an inner end region of the outer rotor of the electric motor.

The electric motor may have its stator disposed on an inner diameter side of the outer rotor, with the stator being fastened to a housing which houses the vehicle driving apparatus.

The planetary carrier of the planetary gear mechanism may have a carrier pin for supporting the planetary gears; an outboard-side carrier flange; and an inboard-side carrier flange, with the outboard-side carrier flange having a hollow shaft portion extending outboard, and the hollow shaft portion having its outer diameter supported inside of the stator of the electric motor via a rolling bearing.

The inboard-side carrier flange of the planetary gear mechanism may have a hollow shaft portion extending inboard, with the hollow shaft portion having an outer diameter surface provided with an output-side small diameter gear for engagement with a large-diameter gear serving as an output gear of the output gear shaft which is coupled to the driving wheel.

The vehicle driving apparatus may include a housing which has a three-piece structure constituted by a center housing, a left-side housing and a right-side housing, with the center housing having a partition wall at its center for division into a left portion and a right portion. With this arrangement, the first joint member and the second joint member penetrate the partition wall.

The joint members may be double-structured, in which one of the first joint member and the second joint member is provided by a hollow shaft while the other of the joint members is provided by a shaft inserted through the hollow shaft, with coupling of each of the first joint member and the second joint member to its corresponding planetary carrier being provided by spline fitting.

The spline fitting may be axially slidable fitting.

The inner-diameter-side one of the first and the second joint members may be provided with an oil hole.

ADVANTAGEOUS EFFECTS OF INVENTION

As described above, according to the present invention, a vehicle driving apparatus includes: two driving sources each mounted on a vehicle and controllable independently from the other, left and a right driving wheels, and a gear unit mounted between the two driving sources and the left and right driving wheels including two coaxially assembled planetary gear mechanisms each having three elements with two degrees of freedom. In this arrangement, each of the driving sources is provided by an electric motor including an outer rotor, while the planetary gear mechanism includes an input outer gear which is provided in the outer rotor of the electric motor. This makes it possible to drive the planetary gear mechanism at a lower number of revolutions on its input stage, which decreases likelihood of friction heat generation due to slippage between gear teeth flanks and therefore decreases lubrication problems of the gears.

Also, the electric motor has an outer-rotor structure. This allows to increase the outer diameter, making it possible to output a larger torque than those motors which having the same volume. Thus, the invention offers a more compact gear unit for vehicle driving apparatuses having a two-stage speed reducer configuration.

Also, the torque difference distribution mechanism, which is provided by the gear unit, is constituted by two planetary gear mechanisms that are connected to each other, with the sun gears connected to the planetary carriers of the other, so the invention does not need a connection member which has a larger diameter than the outer gears. This makes it possible to reduce the size of the torque difference amplification mechanism, which then makes it possible to reduce the size and weight of the vehicle driving apparatus that includes the torque difference amplification mechanism.

Also, the two planetary gear mechanisms are joined to each other using the first joint member and the second joint member, employing a double structure in which one of the shafts is hollow and the other is inserted therethrough; and the inner joint member is formed with an oil hole on its inner diameter side for lubrication to the shafts. This makes it easy to provide lubrication to gear tooth flanks and bearings inside the planetary gear mechanisms.

BRIEF DESCRIPTION OF DRAWINGS

Fig. 1 is a cross-sectional plan view which shows an embodiment of a vehicle driving apparatus according to the present invention.

Fig. 2 is an enlarged view of a gear unit portion in the embodiment in Fig. 1.

Fig. 3 is a sectional view taken in a line A-A in Fig. 1.

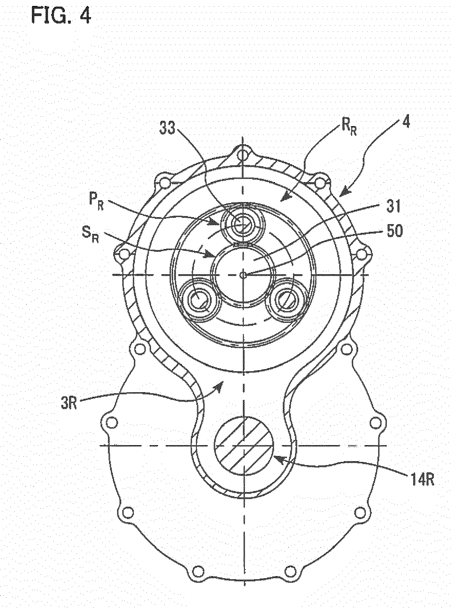

Fig. 4 is a sectional view taken in a line B-B in Fig. 1.

Fig. 5 shows a gear configuration of the vehicle driving apparatus according to the embodiment in Fig. 1 in the form of skeleton diagram to explain an electric vehicle.

Fig. 6 is a velocity diagram for describing a torque difference amplification factor provided by the gear unit incorporated in the vehicle driving apparatus according to the embodiment in Fig. 1.

Fig. 7 is a cross-sectionat plan view which shows another embodiment of a vehicle driving apparatus according to the present invention.

Fig. 8 is an enlarged view of a gear unit portion in the embodiment in Fig. 7.

Fig. 9 is a skeleton diagram which shows a gear configuration of a vehicle driving apparatus in a conventional technique 1.

Fig. 10 is a velocity diagram for describing a torque difference amplification factor provided by the gear unit incorporated in the vehicle driving apparatus according to the conventional technique 1.

Fig. II is a skeleton diagram which shows a gear configuration of a vehicle driving apparatus according to a conventional technique 2.

Fig. 12 is a velocity diagram for describing a torque difference amplification factor provided by the gear unit incorporated in the vehicle driving apparatus according to the conventional technique 2.

DESCRIPTION OF EMBODIMENTS

Hereinafter, embodiments of the present invention will be described based on the attached drawings.

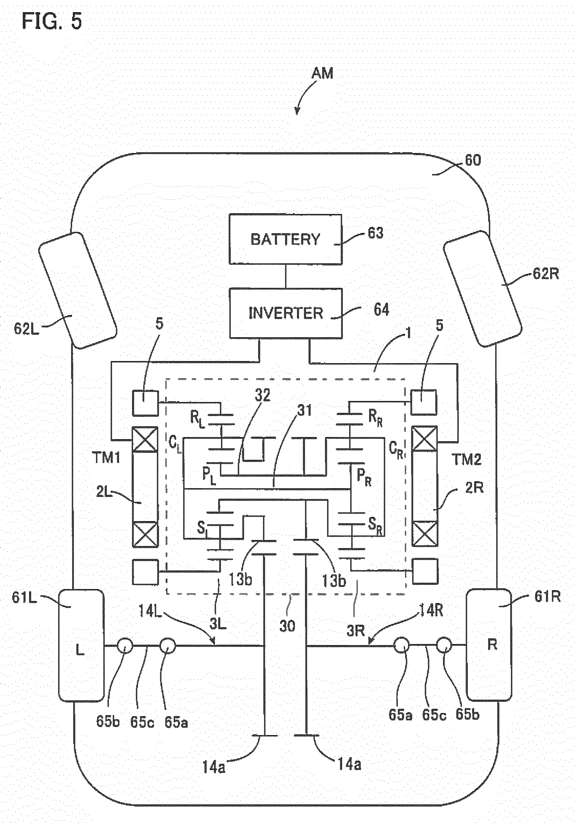

Fig. 5 shows an electric vehicle AM, which is a rear-wheel drive vehicle including a chassis 60; driving wheels 61L, 61R as rear wheels; front wheels 62L, 62R; a two-motor vehicle driving apparatus 1 according to the present invention; a battery 63; an inverter 64, etc. Fig. 5 shows a gear configuration of the vehicle driving apparatus 1 as a skeleton diagram.

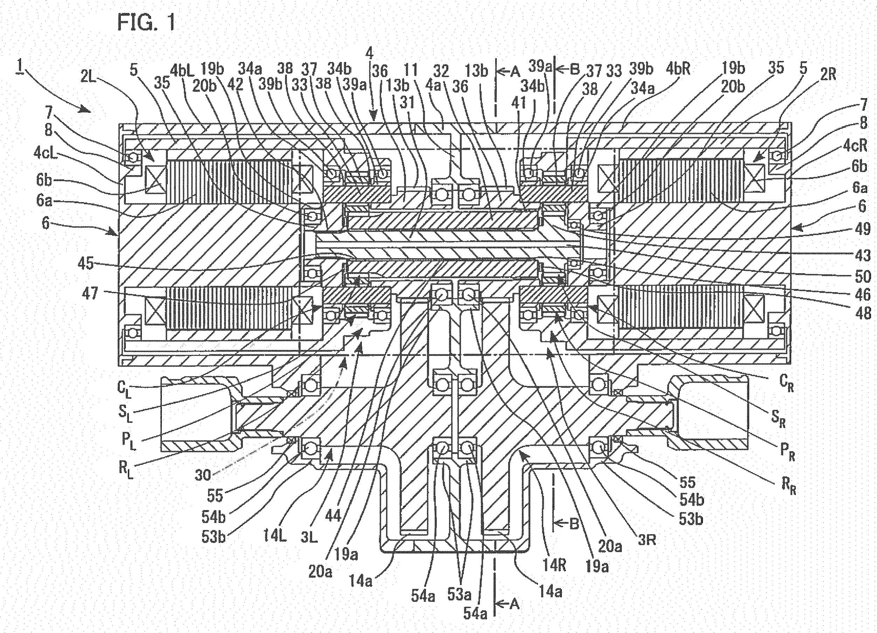

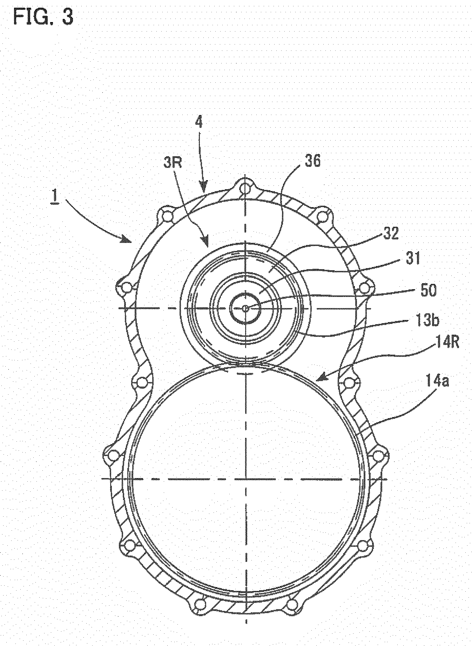

As shown in Fig. 1 and Fig. 3, the vehicle driving apparatus 1 includes: electric motors 2L, 2R which are mounted on the vehicle and serve as two, independently controllable drive sources; and two, i.e., left and right, planetary gear mechanisms 3L, 3R each having three elements and two degrees of freedom, provided between the left driving wheel 61L and the right driving wheel 61R between the electric motors 2L, 2R.

Driving torques from the two-motor vehicle driving apparatus 1 are transmitted, via drive shafts constituted by constant velocity joints 65a, 65b and middle shafts 65c, to the left driving wheel 61L and the right driving wheel 61R.

It should be noted here that the two-motor vehicle driving apparatus 1 is also applicable, in addition to rear wheel drive systems as shown in Fig. 5, to front wheel drive systems and four-wheel drive systems.

The left electric motor 2L and the right electric motor 2R in the two-motor vehicle driving apparatus 1 are provided by outer-rotor electric motors of the same specification, having the same maximum output.

The two-motor vehicle driving apparatus 1 is housed in a housing 4.

The housing 4 is divided into three pieces in a direction orthogonal to an axis of the planetary gear mechanisms 3L, 3R, providing a three-piece structure as shown in Fig. 1, including a center housing 4a and a left and a right side-housing 4bL, 4bR fixed to two side surfaces of the center housing 4a. The left side-housing 4bL and the right side-housing 4bR are fixed to respective openings of both sides of the center housing 4a using a plurality of bolts (not illustrated).

The left side-housing 4bL and the right side-housing 4bR house the electric motors 2L, 2R in their cylindrical portions. The cylindrical portions have their outer side surfaces provided with outer walls 4cL, 4cR for closing the cylindrical portions.

As shown in Fig. 1, the center housing 4a has a partition wall 11 at its center. The partition wall 11 divides the housing 4 into two, one on the left and the other on the right.

The electric motors 2L, 2R are provided by outer rotor motors: On an inner diameter side of the outer rotor 5, a stator 6 is provided and is fastened to the housing 4 which houses the vehicle driving apparatus.

The stator 6 includes a stator core 6a and a coil 6b. The stator core 6a is integral with the corresponding one of the outer walls 4cL, 4cR of the cylindrical portions which house the electric motors 2L, 2R.

The outer rotor 5 is disposed spaced apart around an outer circumference of the stator 6, with its outboard end supported rotatably by a rolling bearing 7 with respect to corresponding one of the outer walls 4cL, 4cR of the cylindrical portions which house the electric motors 2L, 2R.

The outer walls 4cL, 4cR of the cylindrical portions which house the electric motors 2L, 2R have their inner walls provided with bearing fitting projections 8 for fixing the rolling bearings 7.

Between the center partition wall 11 of the housing 4 and the left and the right electric motor 2L, 2R, the planetary gear mechanisms 3L, 3R, are housed, each having three elements and two degrees of freedom as constituent members of the gear unit 30 for receiving torques from the two electric motors 2L, 2R, amplifying and then distributing the torques to the left and the right driving wheel 61L, 61R.

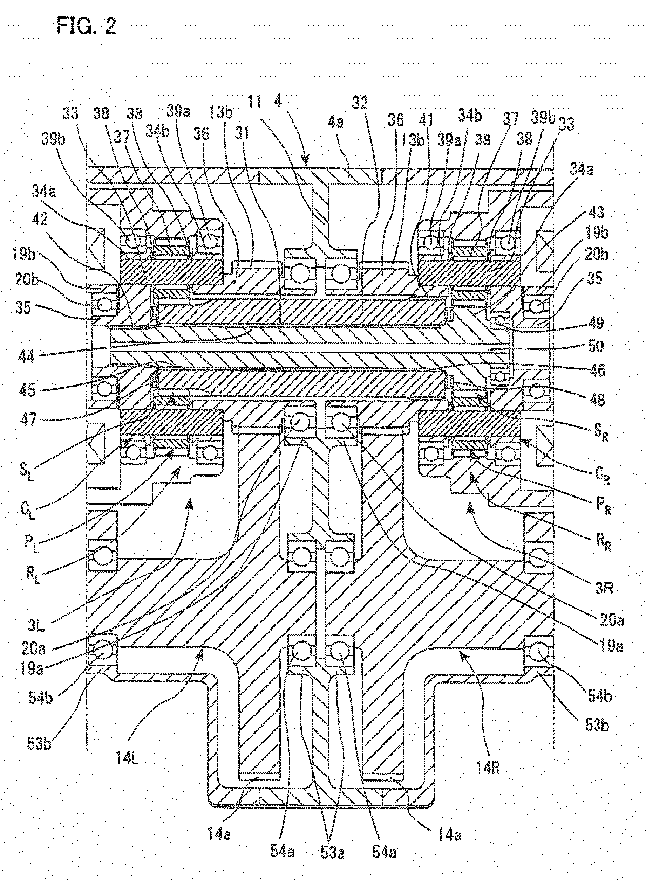

The gear unit 30 is constituted by the planetary gear mechanisms 3L, 3R, which include: inputting outer gears $R_L$, $R_R$ provided in inner diameter surfaces of cylindrical portions formed as inboard extensions of the outer rotors 5 of the electric motors 2L, 2R; sun gears $S_L$, $S_R$ which are coaxial with their respective outer gears $R_L$, $R_R$; planetary gears $P_L$, PR serving as revolution gears in engagement with the outer gears $R_L$, $R_R$ and the sun gears $S_L$, $S_R$; outputting planetary carriers $C_L$, $C_R$ coupled to the planetary gears $P_L$, $P_R$ and are coaxial with the outer gears $R_L$, $R_R$; a first joint member 31 which joins one of the planetary carriers $C_L$ (on the left in Fig. 1) with the sun gear $S_R$ in the other (on the right in Fig. 1 and Fig. 2); a second joint member 32 which joins one of the sun gears $S_L$ (on the left in Fig. 1 and Fig. 2) with the planetary carrier $C_R$ in the other (on the right in Fig. 1 and Fig. 2); and output-side small diameter gears 13b which engage with output gears 14a of output gear shafts 14L, 14R. The output-side small diameter gears 13b are coupled to the planetary carriers $C_L$, $C_R$.

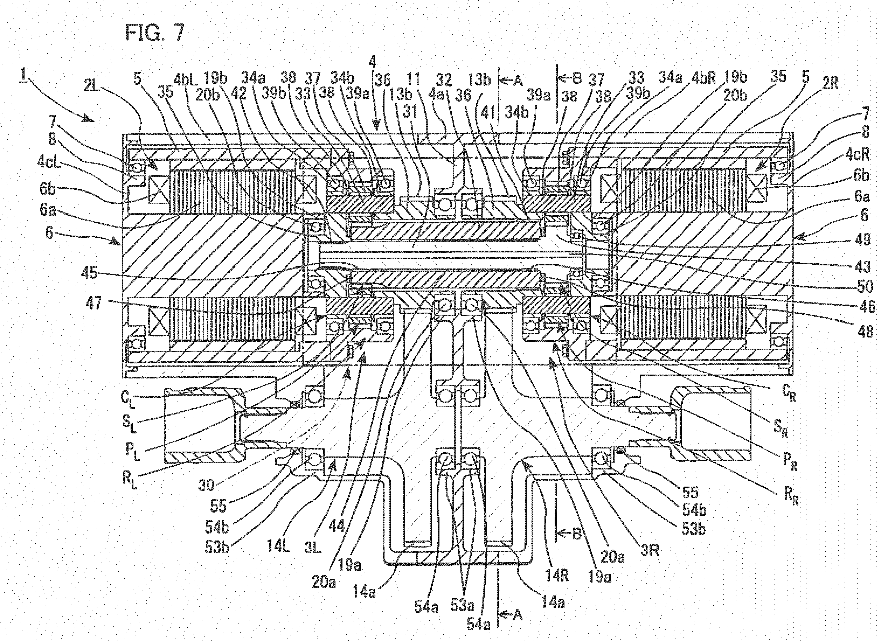

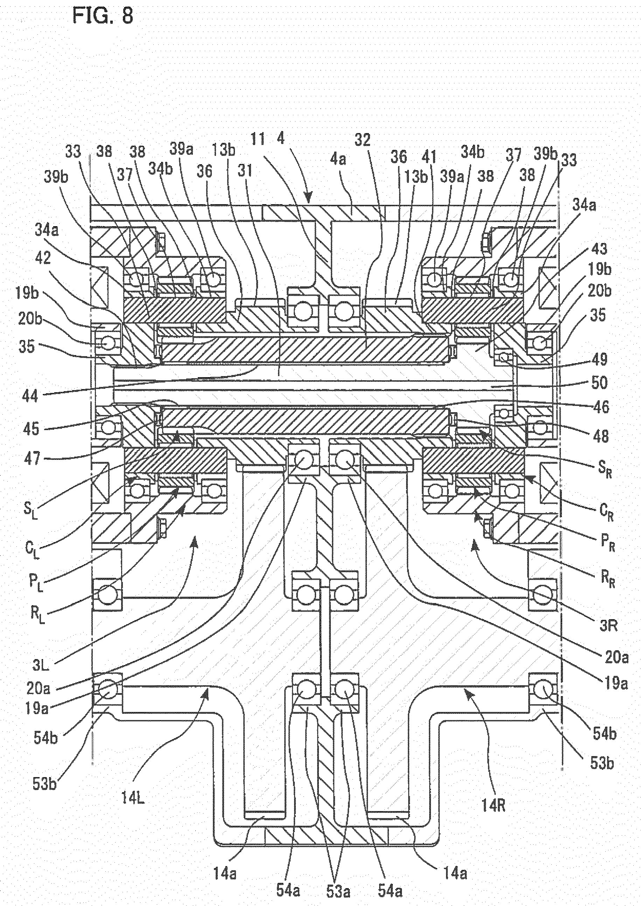

It should be noted here that in the embodiment shown in Fig. 1 and Fig. 2, the outer gears $R_L$, $R_R$ which make engagement with the planetary gears $P_L$, $P_R$ of the planetary gear mechanisms 3L, 3R are integral with the inner diameter surfaces of the outer rotors 5 of the electric motors 2L, 2R. In an embodiment in Fig. 7 and Fig. 8, the outer gears $R_L$, $R_R$ which make engagement with the planetary gears $P_L$, $P_R$ of the planetary gear mechanisms 3L, 3R are separately provided at inner ends of the outer rotors 5 of the electric motors 2L, 2R.

Also, in the embodiment in Fig. 1 and Fig. 2, the output-side small diameter gears 13b coupled to the planetary carriers $C_L$, $C_R$ are formed integrally with the planetary carriers $C_L$, $C_R$, but these gears may be formed separately.

The planetary carriers $C_L$, $C_R$ have carrier pins 33 for supporting the planetary gears $P_L$, $P_R$; outboard-side carrier flanges 34a coupled to outboard ends of the carrier pins 33; and inboard-side carrier flanges 34b coupled to inboard ends of the carrier pins.

The outboard-side carrier flange 34a has a hollow shaft portion 35 extending outboard. The hollow shaft portion 35 has its outboard-side outer diameter surface supported, via a rolling bearing 20b, by a bearing fitting hole 19b which is formed in an inboard-side end surface of the stator core 6a in each of the electric motors 2L, 2R.

The inboard-side carrier flange 34b has a hollow shaft portion 36 extending inboard. The hollow shaft portion 36 has its inboard-side end supported, via a rolling bearing 20a, by a bearing fitting hole 19a which is formed in the partition wall 11 of the center housing 4a.

The output-side small diameter gear 13b is formed integrally with an outer circumferential surface of the hollow shaft portion 35 of the carrier flange 34a.

The planetary gears $P_L$, $P_R$ are supported by the carrier pins 33 via needle roller bearings 37.

Also, between each set of counter surfaces of the carrier flanges 34a, 34b and the planetary gears $P_L$, $P_R$, a thrust plate 38 is inserted for smooth rotation of the planetary gears $P_L$, $P_R$.

Between each set of outer circumferential surfaces of the carrier flanges 34a, 34b and the outer gears $R_L$, $R_R$, rolling bearings 39a, 39b are disposed.

The first joint member 31 and the second joint member 32 which couple the two planetary gear mechanisms 3L, 3R that provide the gear unit 30 of the vehicle driving apparatus 1 penetrate the partition wall 11 that divides the center housing 4a of the housing 4 into the left and the right portion.

The first joint member 31 and the second joint member 32 are disposed coaxially with each other in a double structure, i.e., a structure where one of the joint members (the second joint member 32 in the embodiment shown in Fig. 1 and Fig. 2) has a hollow shaft and the other of the joint members (the first joint member 31 in the embodiment shown in Fig. 1 and Fig. 2) has a shaft inserted through the hollow shaft.

In the embodiment shown in Fig. 1 and Fig. 2, a spline 41 is formed at an end of the planetary gear mechanism 3R on the right side of the second joint member 32 which has the hollow shaft, and at the hollow shaft portion 36 of the inboard-side carrier flange 34b of the planetary carrier $C_R$, whereby the second joint member 32 is coupled to the planetary carrier $C_R$ by means of spline fitting.

Also, in the embodiment shown in Fig. 1 and Fig. 2, a spline 42 is formed at an end of the planetary gear mechanism 3L on the left side of the first joint member 31, and at the hollow shaft portion 35 of the outboard-side carrier flange 34a of the planetary carrier $C_L$, whereby the first joint member 31 is coupled to the planetary carrier $C_L$ by means of spline fitting.

As described, in the planetary gear mechanisms 3L, 3R, by employing the spline fitting for coupling the first joint member 31 to the planetary carrier $C_L$, and the second joint member 32 to the planetary carrier $C_R$, it becomes possible to separate the two planetary gear mechanisms 3L, 3R in the left-right direction, allowing these planetary gear mechanisms to be assembled together with other speed-reduction gear shafts into the housing 4 which has a three piece structure, from both left and right directions.

The second joint member 32 has an end facing the planetary carrier $C_L$, having its outer circumferential surface formed with an external gear for engagement with the planetary gear $P_L$ of the left planetary gear mechanism 3L. This external gear constitutes the sun gear $S_L$ of the left planetary gear mechanism 3L.

As for the first joint member 31, which is inserted through the second joint member 32 that is provided by the hollow shaft, the right planetary gear mechanism 3R has its end provided with a large-diameter portion 43. The large-diameter portion 43 has its outer circumferential surface formed with an external gear for engagement with the planetary gear $P_R$ of the right planetary gear mechanism 3R. This external gear constitutes the sun gear $S_R$ of the right planetary gear mechanism.

Of the first joint member 31 and the second joint member 32, the inner-diameter-side joint member (the first joint member 31) is coupled to the sun gear $S_R$, a maximum diameter of which is smaller than a minimum diameter of a spline hole in an inner surface of the hollow shaft portion 36 of the inboard-side carrier flange 34b of the planetary carrier $C_R$ fitted by the outer-diameter-side joint member (the second joint member 32). This makes it easy to assemble the inner-diameter-side joint member (the first joint member 31).

Between an outer circumferential surface of the inner-diameter-side joint member (the first joint member 31) and an inner circumferential surface of the outer-diameter-side joint member (the second joint member 32), a collar 44 is disposed. Needle roller bearings 45, 46 are disposed at two ends of the collar 44.

Fitting (splines 41, 42) of the first joint member 31 and the second joint member 32 with the planetary carriers $C_L$, $C_R$ is provided by axially slidable fitting. This makes it possible to eliminate imbalanced load to the gear tooth flank caused by thrust forces from the helical gears.

As the first joint member 31 and the second joint member 32 and the planetary carriers $C_L$, $C_R$ which are spline fitted (splines 41, 42) therewith slide axially, this movement is limited by thrust bearings 47, 48 provided at two ends of the outer-diameter-side joint member (the second joint member 32 in the embodiment in Fig. 1 and Fig. 2).

The inner-diameter-side joint member (the first joint member 31 in the embodiment in Fig. 1 and Fig. 2) in the double-structure shaft which couples the two planetary gear mechanisms 3L, 3R, is supported at an end away from the spline-fitting, between the joint member (the first joint member 31 in the embodiment in Fig. 1 and Fig. 2) and the planetary carrier ($C_L$ in the embodiment in Fig. 1 and Fig. 2), by a deep groove ball bearing 49 with respect to the other planetary carrier ($C_R$ in the embodiment in Fig. 1 and Fig. 2).

The inner-diameter-side joint member (the first joint member 31 in the embodiment in Fig. 1 and Fig. 2) in the double-structure shaft which couples the two planetary gear mechanisms 3L, 3R has an oil hole 50 through its core of the shaft.

The output gear shafts 14L, 14R, each having the large-diameter output gear 14a, are supported by bearing fitting holes 53a formed in two surfaces of the partition wall 11 of the center housing 4a and by bearing fitting holes 53b formed in each of the side housings 4bL, 4bR, via rolling bearings 54a, 54b. The bearing fitting holes 53a, 53b are stepped, with wall portions for contact by outer rings of the rolling bearings 54a, 54b.

The output gear shafts 14L, 14R have their respective outboard end portions extended from openings formed in the side housings 4bL, 4bR, out of the housing 4. These extended outboard ends of the output gear shafts 14L, 14R have their outer circumferential surfaces joined to outer joint members of the constant velocity joints 65a by means of spline coupling.

The constant velocity joints 65a joined to the output gear shafts 14L, 14R are connected to the driving wheels 61L, 61R via middle shafts 65c and the constant velocity joints 65b (Fig. 5).

Oil seals 55 are provided around outboard end portions of the output gear shafts 14L, 14R, to seal gaps in the openings formed in the side housings 4bL, 4bR, thereby to prevent lubrication oil from leaking from inside the housing 4 and to prevent muddy water and the like from making entry from outside.

The two-motor vehicle driving apparatus 1 according to the embodiment shown in Fig. 1 and Fig. 2 has a gear configuration shown in the skeleton diagram in Fig. 5.

As shown in Fig. 5, the left electric motor 2L and the right electric motor 2R are driven by electric power which is supplied from a battery 63 via an inverter 64. The electric motors 2L, 2R are controlled independently from each other by an electronic controller (not illustrated), being able to generate and output different torques.

Torques from the outer rotors 5 of the electric motors 2L, 2R are supplied to the outer gears $R_L$, $R_R$ of the gear unit 30.

Via the gear unit 30, the output-side small diameter gears 13b in the planetary gear mechanisms 3L, 3R engage with the large-diameter output gears 14a of the output gear shafts 14L, 14R. The torques from the outer rotors 5 of the electric motors 2L, 2R are further amplified by a teeth ratio between the output-side small diameter gear 13b and the output gear 14a, and then outputted to the driving wheels 61L, 61R.

The gear unit 30 is an assembly of two identical single pinion planetary gear mechanisms 3L, 3R, each having three elements and two degrees of freedom, being coaxially arranged with the other.

The planetary gear mechanisms 3L, 3R include: the coaxially arranged sun gears $S_L$, $S_R$ and outer gears $R_L$, $R_R$; the plurality of planetary gears $P_L$, $P_R$ between the sun gears $S_L$, $S_R$ and the outer gears $R_L$, $R_R$; and the planetary carriers $C_L$, $C_R$ which support the planetary gears $P_L$, $P_R$ rotatably and are coaxial with the sun gears $S_L$, $S_R$ and the outer gears $R_L$, $R_R$. It should be noted here that, the sun gears $S_L$, $S_R$ and the planetary gears $P_L$, $P_R$ are external gears having their teeth on their outer circumference, while the outer gears $R_L$, $R_R$ are internal gears having their teeth on their inner circumference. The planetary gears $P_L$, $P_R$ engage with the sun gears $S_L$, $S_R$ and the outer gears $R_L$, $R_R$.

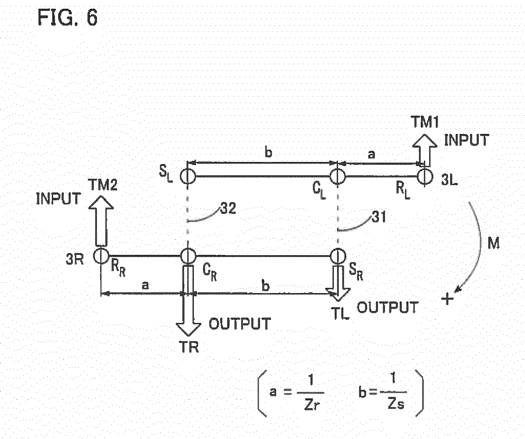

In the planetary gear mechanisms 3L, 3R, if the planetary carriers $C_L$, $C_R$ are fixed, the sun gears $S_L$, $S_R$ and the outer gears $R_L$, $R_R$ rotate in reverse directions. For this reason, in the velocity diagram shown in Fig. 6, the outer gears $R_L$, $R_R$ and the sun gears $S_L$, $S_R$ are disposed on opposite sides with respect to the planetary carriers $C_L$, $C_R$.

As described above, in the gear unit 30, a first planetary gear mechanism, i.e., the planetary gear mechanism 3L which has the sun gear $S_L$, the planetary carrier $C_L$, the planetary gears $P_L$, and the outer gear $R_L$; and a second planetary gear mechanism, i.e., the planetary gear mechanism 3R which has the sun gear $S_R$, the planetary carrier $C_R$, the planetary gears $P_R$, and the outer gear $R_R$; are assembled coaxially with each other.

With these, the planetary carrier $C_L$ of the first planetary gear mechanism 3L and the sun gear $S_R$ of the second planetary gear mechanism 3R are joined to each other to form the first joint member 31, while the sun gear $S_L$ of the first planetary gear mechanism and the planetary carrier $C_R$ of the second planetary gear mechanism 3R are joined to each other to form the second joint member 32.

A torque TM1 generated in the electric motor 2L is supplied to the outer gear $R_L$ of the first planetary gear mechanism 3L, and then the first planetary gear mechanism 3L transmits the torque to the output-side small diameter gear 13b. The output-side small diameter gear 13b engages with the output gear 14a of the output gear shaft 14L to provide one-stage speed reduction, and thus a driving torque TL is outputted from the output gear shaft 14L to the driving wheel 61L.

A torque TM2 generated in the electric motor 2R is supplied to the outer gear $R_R$ of the second planetary gear mechanism 3R, and then the second planetary gear mechanism 3R transmits the torque to the output-side small diameter gear 13b. The output-side small diameter gear 13b engages with the output gear 14a of the output gear shaft 14R to provide one-stage speed reduction, and thus a driving torque TR is outputted from the output gear shaft 14R to the driving wheel 61R.

Outputs from the electric motors 2L, 2R are supplied to respective outer gears $R_L$, $R_R$ of the two planetary gear mechanisms 3L, 3R, and the outputs from the first joint member 31 and the second joint member 32 are supplied to the driving wheels 61L, 61R.

The second joint member 32 has a hollow shaft structure, through which the first joint member 31 is inserted. The shaft which constitute the first joint member 31 and the second joint member 32 has a double structure.

The first joint member 31, the solid shaft, has one of its ends (right end in the figure) serving as a rotation shaft of the sun gear $S_R$, with the other end (left end in the figure) penetrating the sun gear $S_L$ and connected to the planetary carrier $C_L$. The second joint member 32, the hollow shaft, has one of its ends (left end in the figure) serving as a rotation shaft of the sun gear $S_L$, with the other end (right end in the figure) connected to the planetary carrier $C_R$. The first joint member 31 and the second joint member 32 join the two planetary gear mechanisms.

Since the gear unit 30 is an assembly of the two identical single pinion planetary gear mechanisms 3L, 3R, it can be graphically represented as two velocity diagrams as shown in Fig. 6. For easy understanding, the two velocity diagrams are arranged in the up-down direction, with the upper velocity diagram representing the left planetary gear mechanism 3L, while the lower velocity diagram representing the right planetary gear mechanism 3R. In the embodiment of Fig. 1 and Fig. 2, driving torques TL, TR taken out of the gear unit 30 are amplified by a certain reduction ratio as the torques are transmitted by the output-side small diameter gears 13b engaged with the output gears 14 before being transmitted to the left and the right driving wheel 61L, 61R. For the sake of easy understanding, however, the driving torques will continue to be called TL and TR in describing the velocity diagrams in Fig. 6 and mathematical equations hereinbelow.

The two, planetary gear mechanisms 3L, 3R use identical gears having identical number of teeth: So, a distance between the outer gear $R_L$ and the planetary carrier $C_L$ is equal to a distance between the outer gear $R_R$ and the planetary carrier $C_R$ in the velocity diagrams, and this distance will be represented by "a". Likewise, a distance between the sun gear $S_L$ and the carrier $C_L$ is equal to a distance between the sun gear $S_R$ and the planetary carrier $C_R$, and this distance will be represented by "b". A ratio of a distance between the planetary carriers $C_L$, $C_R$ and the outer gears $R_L$, $R_R$ to a distance between the planetary carriers $C_L$, $C_R$ and the sun gears $S_L$, $S_R$ is equal to a ratio of an inverse (1/Zr) of the number of teeth Zr of the outer gears $R_L$, $R_R$ to an inverse (1/Zs) of the number of teeth Zs of the sun gears $S_L$, $S_R$. Therefore, a=(1/Zr). and b=(1/Zs).

With $R_R$ being a point of reference, a proportion of moment M yields the following equation (11), where an arrow M in Fig. 6 indicates the positive direction of the moment:

$$a \cdot TR + (a + b) \cdot TL - (b + 2a) \cdot TM1 = 0 \qquad ...(11)$$

With $R_L$ being a point of reference, a proportion of moment M yields the following equation (12):

$$-a \cdot TL - (a + b) \cdot TR + (b + 2a) \cdot TM2 = 0 \qquad ...(12)$$

From Equation (11) + Equation (12), the following equation (13) is obtained:

$$-b \cdot (TR - TL) + (2a + b) \cdot (TM2 - TM1) = 0$$

$$(TR - TL) = ((2a + b)/b) \cdot (TM2 - TM1) \qquad ...(13)$$

The term (2a+b)/b in Equation (13) is the torque difference amplification factor α. Substitution with a=1/Zr and b=1/Zs gives α = (Zr+2Zs)/Zr, and the following torque difference amplification factor α is obtained:

$$\alpha = (Zr + 2Zs)/Zr$$

In the present invention, inputs from the electric motors 2L, 2R are $R_L$, $R_R$, while outputs to the driving wheels 61L, 61R are $S_R + C_L$, $S_L + C_R$.

When the two electric motors 2L, 2R generate mutually different torques TM1, TM2 and there is an input torque difference ΔTIN (= (TM2 - TM1)), the gear unit 30 amplifies the input torque difference ΔTIN and therefore it is possible to obtain a driving torque difference α·ΔTIN which is larger than the input torque difference ΔTIN. In other words, even if the input torque difference ΔTIN is small, it is possible with the gear unit 30 to amplify the input torque difference ΔTIN by the above-described torque difference amplification factor α (= (Zr + 2Zs)/Zr), and therefore it is possible to make the driving torque difference ΔTOUT (= a·(TM2 - TM1)) between the driving torques TL, TR larger than the input torque difference ΔTIN before the torques are supplied to the left driving wheel 61L and the right driving wheel 61R.

In the conventional technique I and the conventional technique 2, the torque difference amplification mechanism which is provided by the gear unit 105 includes outer gears R in both of its left and right joint members of the two planetary gear mechanisms. Therefore, one of the joint members which connects the left or the right outer gear with a separate member must have a larger diameter than the other outer gear R.

According to the present invention, the torque difference distribution mechanism which is provided by the gear unit 30 is constituted by two planetary gear mechanisms which are connected to each other at the sun gear $S_L$ and the planetary carrier $C_R$, and at the sun gear $S_R$ and the planetary carrier $C_L$, so the invention does not need a connection member which has a larger diameter than the outer gears $R_L$, $R_R$. Hence, the present invention makes it possible to reduce the size of the torque difference distribution mechanism as compared to those in the conventional technique 1 and the conventional technique 2, and therefore to reduce the size and weight of the vehicle driving apparatus 1 for an electric vehicle which incorporates the torque difference distribution mechanism.

Reducing the size and weight of the vehicle driving apparatus 1 for electric vehicles increases degree of freedom in layout of the vehicle driving apparatus 1 on the vehicle and in layout of the other peripheral components on the vehicle.

Also, downsizing the vehicle driving apparatus 1 provides other benefits such as increased cabin space.

In the embodiments described thus far, output torques from the two planetary gear mechanisms 3L, 3R are transmitted to the output gears 14a of the output gear shafts 14L, 14R which are coupled to the driving wheels 61L, 61R; alternatively however, multi-stage gear mechanism may be used with intermediate gear shafts being provided between the two sets of the planetary gear mechanisms 3L, 3R and the output gear shafts 14L, 14R.

In the embodiment shown in Fig. 1, two drive sources provided by the electric motors 2L, 2R are electric motors of the same specification, having the same maximum output; but the two drive sources are not limited to this example.

The vehicle on which the vehicle driving apparatus 1 is mounted is not limited to electric vehicles and hybrid electric vehicles. For example, the vehicle may be a fuel cell automobile which utilize a first electric motor 2L and a second electric motor 2R as drive sources.

The present invention is not limited in any way by the embodiments described so far, and may be implemented in many ways within the scope of the present invention.

REFERENCE SIGNS LIST

| | |
|---|---|
| 1: | Vehicle Driving Apparatus |
| 2L, 2R: | Electric Motor |
| 3L, 3R: | Planetary Gear Mechanism |
| 4: | Housing |
| 4a: | Center Housing |
| 4bL, 4bR: | Side Housing |
| 4cL, 4cR: | Outer Wall |
| 5: | Outer Rotor |
| 6: | Stator |
| 6a: | Stator Core |
| 6b: | Coil |
| 7: | Rolling Bearing |
| 8: | Bearing Fitting Projection |
| 11: | Partition Wall |
| 13b: | Output-Side Small Diameter Gear |
| 14L, 14R: | Output Gear Shaft |
| 14a: | Output Gear |
| 19a, 19b: | Bearing Fitting Hole |
| 20a, 20b: | Rolling Bearing |
| 30: | Gear Unit |
| 31: | First Joint Member |
| 32: | Second Joint Member |
| 33: | Carrier Pin |
| 34a, 34b: | Carrier Flange |
| 35, 36: | Hollow Shaft Portion |
| 37: | Needle Roller Bearing |
| 38: | Thrust Plate |
| 39a, 39b: | Rolling Bearing |
| 41, 42: | Spline |
| 43: | Large-Diameter Portion |

| 44: | Collar |
|---|---|
| 45, 46: | Needle Roller Bearing |
| 47, 48: | Thrust Bearing |
| 49: | Deep Groove Ball Bearing |
| 50: | Oil Hole |
| 53a, 53b: | Bearing Fitting Hole |
| 54a, 54b: | Rolling Bearing |
| 55: | Oil Seal |
| 60: | Chassis |
| 61L, 61R: | Driving Wheel |
| 62L, 62R: | Front Wheel |
| 63: | Battery |
| 64: | Inverter |
| 65a, 65b: | Constant Velocity Joint |
| 65c: | Middle Shaft |
| AM: | Electric Vehicle |
| $C_L$, $C_R$: | Planetary Carrier |
| $P_L$, $P_R$: | Planetary Gear |
| $R_L$, $R_R$: | Outer Gear |
| $S_L$, $S_R$: | Sun Gear |

**Claims**

1. A vehicle driving apparatus comprising: two driving sources each mounted on a vehicle and controllable independently from the other; a left driving wheel and a right driving wheel; and a gear unit mounted between the two driving sources and the left and right driving wheels, the gear unit including two coaxially assembled planetary gear mechanisms each having three elements with two degrees of freedom; wherein each of the driving sources is provided by an electric motor including an outer rotor, each of the planetary gear mechanisms includes an input outer gear coupled to the outer rotor of the electric motor, an output planetary carrier provided coaxially with the outer gear, a sun gear provided coaxially with the outer gear, and planetary gears as revolutionary gears, the planetary carrier of one of the two planetary gear mechanisms is joined to the sun gear of the other by a first joint member, the sun gear of said one of the two is joined to the planetary carrier of said other by a second joint member, the two joint members are coaxial with each other, and the planetary carrier of each of the planetary gear mechanisms is coupled to an output gear shaft of the driving wheel.

2. The vehicle driving apparatus according to Claim 1, wherein the outer gear which makes engagement with the planetary gears of the planetary gear mechanism, is provided in an inner diameter surface of the electric motor's outer rotor, integrally therewith.

3. The vehicle driving apparatus according to Claim 1, wherein the outer gear, which makes engagement with the planetary gears of the planetary gear mechanism, is provided separately at an inner end region of the outer rotor of the electric motor.

4. The vehicle driving apparatus according to one of Claims 1 through 3, wherein the electric motor has its stator disposed on an inner diameter side of the outer rotor, the stator being fastened to a housing which houses the vehicle driving apparatus.

5. The vehicle driving apparatus according to Claim 4, wherein the planetary carrier of the planetary gear mechanism has a carrier pin for supporting the planetary gears; an outboard-side carrier flange; and an inboard-side carrier flange; the outboard-side carrier flange has a hollow shaft portion extending outboard; and the hollow shaft portion has its outer diameter supported inside of the stator of the electric motor via a rolling bearing.

6. The vehicle driving apparatus according to Claim 4 or 5, wherein the inboard-side carrier flange of the planetary gear mechanism has a shaft portion extending inboard; and the shaft portion has an outer diameter surface provided with an output-side small diameter gear for engagement with a large-diameter gear serving as an output gear of the output gear shaft which is coupled to the driving wheel.

7. The vehicle driving apparatus according to one of Claims 1 through 6, wherein the vehicle driving apparatus includes a housing having a three-piece structure constituted by a center housing, a left-side housing and a right-side housing; the center housing has a partition wall at its center for division into a left portion and a right portion; and the first joint member and the second joint member penetrate the partition wall.

8. The vehicle driving apparatus according to one of Claims 1 through 7, wherein the joint members are double-structured, in which one of the first joint member and the second joint member is provided by a hollow shaft while the other of the joint members is provided by a shaft inserted through the hollow shaft; and coupling of each of the first joint member and the second joint member to its corresponding planetary carrier is provided by a spline fitting.

9. The vehicle driving apparatus according to one of Claims 1 through 8, wherein the inner-diameter-side one of the first and the second joint members has an oil hole.

EP 3 418 607 A1

FIG. 1

16

FIG. 2

FIG. 3

FIG. 4

FIG. 5

## FIG. 6

$$\left( a = \frac{1}{Zr} \qquad b = \frac{1}{Zs} \right)$$

FIG. 7

FIG. 8

FIG. 9

FIG. 10

FIG. 11

FIG. 12

$$\left( a = \frac{1}{Zr} \qquad b = \frac{1}{Zs} \right)$$

## INTERNATIONAL SEARCH REPORT

| International application No. |
|---|
| PCT/JP2017/001471 |

A. CLASSIFICATION OF SUBJECT MATTER
*F16H48/36*(2012.01)i, *F16H48/10*(2012.01)i, *F16H48/38*(2012.01)i, *F16H57/04*
(2010.01)i

According to International Patent Classification (IPC) or to both national classification and IPC

B. FIELDS SEARCHED

Minimum documentation searched (classification system followed by classification symbols)
F16H48/36, F16H48/10, F16H48/38, F16H57/04

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2008-295173 A (Honda Motor Co., Ltd.),<br>04 December 2008 (04.12.2008),<br>paragraphs [0041] to [0086]; fig. 1 to 2<br>& US 2009/0038866 A1<br>paragraphs [0079] to [0135]; fig. 1 to 2<br>& WO 2008/146589 A1 & EP 2149474 A1<br>& CN 101678776 A | 1-4,6,8-9<br>5,7 |
| Y | JP 2011-193618 A (JTEKT Corp.),<br>29 September 2011 (29.09.2011),<br>paragraph [0002]; fig. 1<br>& US 2011/0221293 A1<br>paragraph [0005]; fig. 1<br>& EP 2367270 A2 & CN 102195401 A | 1-4,6,8-9 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 10 April 2017 (10.04.17) | 18 April 2017 (18.04.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2017/001471

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-17588 A (Nidec-Shimpo Corp.), 24 January 2008 (24.01.2008), paragraphs [0041] to [0042]; fig. 1 (Family: none) | 1-4,6,8-9 |
| Y | JP 2015-114648 A (Canon Inc.), 22 June 2015 (22.06.2015), paragraphs [0034] to [0035]; fig. 3 (Family: none) | 6,8-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015021594 A

- JP 4907390 B